(19) Europäisches Patentamt
European Patent Office
Office européen des brevets

(11) **EP 1 865 021 B1**

(12) **EUROPEAN PATENT SPECIFICATION**

(45) Date of publication and mention
of the grant of the patent:
**19.11.2014 Bulletin 2014/47**

(51) Int Cl.:
*C08J 9/04* (2006.01)          *C08L 23/00* (2006.01)
*C08L 67/04* (2006.01)          *C08L 101/16* (2006.01)

(21) Application number: **06729487.6**

(86) International application number:
**PCT/JP2006/305519**

(22) Date of filing: **20.03.2006**

(87) International publication number:
**WO 2006/103969 (05.10.2006 Gazette 2006/40)**

(54) **POLYLACTIC ACID FOAM**

POLYMILCHSÄURESCHAUMSTOFF

MOUSSE EN ACIDE POLYLACTIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.03.2005 JP 2005092482
15.09.2005 JP 2005268023**

(43) Date of publication of application:
**12.12.2007 Bulletin 2007/50**

(73) Proprietor: **TORAY INDUSTRIES, INC.**
**Tokyo 103-8666 (JP)**

(72) Inventors:
• **OKA, Yoshiyuki**
  **Shiga 5200113 (JP)**
• **YOSHIOKA, Takahide**
  **Shiga 5200842 (JP)**
• **OYAMA, Masahiko**
  **Shiga 5202145 (JP)**

(74) Representative: **Webster, Jeremy Mark et al
Mewburn Ellis LLP
33 Gutter Lane
London
EC2V 8AS (GB)**

(56) References cited:
**JP-A- 2002 167 456      JP-A- 2002 238 818
JP-A- 2003 286 360      JP-A- 2004 217 755**

• **DATABASE WPI Week 200457 Thomson
Scientific, London, GB; AN 2004-584429
XP002534624 & JP 2004 217755 A (MITSUI CHEM
INC) 5 August 2004 (2004-08-05)**
• **DATABASE WPI Week 200271 Thomson
Scientific, London, GB; AN 2002-660534
XP002534625 & JP 2002 167456 A (TORAY IND
INC) 11 June 2002 (2002-06-11)**
• **DATABASE WPI Week 200142 Thomson
Scientific, London, GB; AN 2001-394453
XP002534626 & JP 2001 123055 A (SHIMADZU
CORP) 8 May 2001 (2001-05-08)**

**Description**

[Technical field]

The present invention relates to polylactic acid foam. More specifically, the invention relates to polylactic acid foam comprising resin composition that comprises polylactic acid, polyolefin resin and polyolefin resin copolymer wherein the ratio of the polylactic acid to the sum of the polyolefin resin and polyolefin resin copolymer in the resin composition is in a specific range. This polylactic acid foam, which is made from polylactic acid resin with a very small load on the terrestrial environment, is high in heat resistance, moldability and compression strain recovery, and can be used in a variety of applications where polyolefin resin foam is currently used.

[Background art]

Conventionally, olefin resins including polyethylene and polypropylene, polyester resins including polyethylene terephthalate and polybutylene terephthalate, polyamide resins including nylon 6 and nylon 66, and other different synthetic resins have been used as material for fiber, film and other molding compounds. Most of these synthetic resins are produced mainly from petroleum or other fossil materials, and they have been consumed in increasing amounts to replace metal parts, which are heavier, as industries develop. It is said, however, that the deposits of these fossil materials are limited and that they will be exhausted eventually if consumed at the current rate. These synthetic resins, furthermore, are relatively stable and will not degrade or collapse easily after being used. So, products produced from these synthetic resins are incinerated or buried in the ground for disposal after being used. Polyethylene, for example, releases a large amount of heat of combustion when incinerated, and can harm the incinerator. If buried in the ground, polyethylene will remain undegraded semipermanently, and creation of many landfill facilities will destroy landscapes in the terrestrial environment. Foam produced from synthetic resin, in particular, will become bulky waste after being used, which is another problem.

In such circumstances, biodegradable resins have been attracting attention because they will be degraded as a result of hydrolysis or actions of microbes after being buried in the ground as waste. Many biodegradable resins have been developed and at the same time, new fibers, film materials and other molding compounds have been developed from them. Most of these biodegradable resins depend on fossil materials, but polylactic acid can be synthesized from lactic acid which is produced from corn or potato. Thus, polylactic acid is one of the biodegradable resins that are studied very widely, as lactic acid, the raw material for it, can be produced from corn or potato without depending on fossil materials.

Polylactic acid itself has a high melting point as compared with other biodegradable resins, and is very brittle and poor in shock resistance and flexibility although high in heat resistance and strength. Fiber, film or molding compounds can be produced from polylactic acid and used as a single material, but they can also be used in the form of composite material after being combined with other different materials such as fiber, film, sheets, metal plates and wiring material produced from synthetic resin such as polyolefin and polyamide. If buried in the ground after being used, such composite material will remain in the environment if the substances combined with polylactic acid are not biodegradable, and it is very difficult and costly in many cases to separate components made from polylactic acid and other components. Under the existing circumstances, it is difficult for end users to separate biodegradable resins such as polylactic acid and other synthetic resins, and therefore virtually almost all of such composite materials are incinerated for disposal eventually.

Nevertheless, polylactic acid is a synthetic product of lactic acid, which is a plant-derived substance produced from corn etc. as described above. So, even if it is employed as a component of composite material in the form of a molded article that cannot be buried in the ground for final disposal after being used, there are still some advantages such as decrease in consumption of fossil materials, as well as some decrease in the burden on the incinerator which is achieved because the heat of combustion is about half that of polyethylene when incinerated.

From this viewpoint, many studies have been carried out in an attempt to provide improved materials such as blends of polylactic acid and other synthetic resins including polyolefin resin to increase the shock resistance and flexibility compared with polylactic acid, and blends polylactic acid and other biodegradable resins.

For example, naturally degradable resin compositions have been proposed including those comprising physical mixtures of polylactic acid with a polymer or a copolymer selected from the polymer group of ethylene terephthalate, styrene, ethylene, propylene, vinyl chloride, vinyl acetate and alkyl acrylate, and copolymers produced from them (see Patent Reference 1). However, if polylactic acid is simply mixed with a synthetic resin such as polyethylene and polypropylene, a uniform resin composition will not be obtained because these resin components may not be compatible with each other. Thus, its shock resistance will be low and its appearance will be poor, making it impossible to provide a resin composition with physical properties good enough for normal services.

As a solution to problems arising from such poor compatibility, a resin composition comprising polylactic acid and a modified polyolefin compound wherein their weight ratio is in the range of 99.5/0.5 - 40/60 has been proposed (see Patent Reference 2). According to this proposal, such a modified olefin compound may be the following: (a) α-olefin, (b) a monomer comprising glycidyl group having an ethylene-like unsaturated bond, and (c) an epoxy-containing olefin copolymer that comprises a (meth) acrylate or styrene. This proposal, however, provides a resin composition that comprises polylactic acid and a modified olefin compound alone, and therefore, a sufficient shock resistance and flexibility will not be achieved if the content of the polylactic acid is large. On the contrary, as the content of the modified polyolefin compound increases, the difference between the number of carboxyl terminal groups in the polylactic acid and that of the glycidyl groups in the modified polyolefin will become too large, allowing unreacted glycidyl groups to remain and possibly allowing the properties of the resin composition will change during the molding process. Furthermore, modified polyolefin is high in price, and therefore it will be difficult to provide a low-price resin composition if modified polyolefin has to be used in large amounts.

Another study has proposed a polylactic acid based resin composition comprising polylactic acid (A), an aliphatic polyester (B) which is not polylactic acid, and a modified polyolefin compound (C) wherein the content of the modified olefin compound (C) is in the range of 0.1 - 40 wt% of the total weight (see Patent Reference 3). For this proposal, the modified polyolefin compound (C) may be an ethylene - glycidyl methacrylate copolymer, ethylene - ethyl acrylate - maleic anhydride copolymer or a modified polyolefin compound containing poly(meth)acrylic acid in its structure.

With this proposal, the shock resistance and flexibility may be improved by using an appropriate ratio between the polylactic acid and the aliphatic polyester resin other than polylactic acid. If the content of the modified olefin compound is small, however, application to uses under difficult conditions may be limited while if the content of the modified olefin compound is large, on the other hand, it is feared that the products have to be high in price as in the case of Patent Reference 2 described above.

Another study has proposed a molded environment-degradable resin comprising an olefin-based block copolymer consisting of a polyolefin and a polymer that is produced in a radical polymerization reaction or a ring opening polymerization reaction, connected through ether bonds, ester bonds or amide bonds (see Patent Reference 4). Specifically, this proposal lists, for example, a block copolymer produced by connecting an ethylene - propylene random copolymer and polylactic acid through ether bonds, and another block copolymer produced by connecting polypropylene and polylactic acid through ether bonds. However, a very complicated production process is required to produce such a block copolymer. To produce a block copolymer consisting of an ethylene - propylene random copolymer and polylactic acid connected through ether bonds, for example, a catalyst solution is prepared, and an ethylene - propylene random copolymer is produced by using this catalyst solution, followed by hydroboration to produce an ethylene - propylene random copolymer having a boron atom at the end, hydroxylation to produce an ethylene - propylene random copolymer having an OH group at the end, reaction to produce an ethylene - propylene random copolymer having aluminum oxide at the end, and finally, reaction with lactide to produce a block copolymer consisting of an ethylene - propylene random copolymer and polylactic acid connected through ether bonds. Thus, the proposed production method cannot be used widely because it requires many steps, and the resulting resin products have to be high in price.

Furthermore, another study has proposed a biodegradable foam sheet of a resin composition that consists of polycaprolactone or a biodegradable resin comprising polycaprolactone and aliphatic polyester resin, combined with polyolefin resin that is not compatible with the former biodegradable resin (see Patent Reference 5). The proposed material is produced by supplying polycaprolactone or a biodegradable resin comprising polycaprolactone and aliphatic polyester resin to an extruder together with a resin composition comprising polyolefin resin, followed by molding the mixture into a sheet and applying an electron beam as required to crosslink the resulting resin. However, crosslinking of the resin is performed after foaming in this method, making it difficult to achieve a high extent of foaming. Thus, the resulting resin foam will have a very high density in the range of 0.6 - 1.3 $g/cm^3$, and the thickness will be in the range of 15 - 250 $\mu$m, strictly limiting the uses of the foam. In this proposal, furthermore, although the resin has to be crosslinked to achieve a high extent of foaming, any method is shown to achieve uniform crosslinking the polyolefin resin and the biodegradable resin comprising polycaprolactone and aliphatic polyester resin.

In addition, resin foams comprising biodegradable resin have been developed, and studies have also been conducted to provide extruded foams using a hydrocarbon, such as carbon dioxide and pentane, as foaming agent, or crosslinked foams produced by using electron beam or peroxide. It is becoming possible to select an appropriate one from these resin foams to meet the purpose, but there still are limitations on their uses where long-term stability is necessary or where molding has to be performed under severe conditions, partly because the biodegradable resin undergoes hydrolysis.

The present inventors has been studying to achieve an increased heat resistance by introducing a crosslinked structure in biodegradable resin to allow it to be put to uses where molding conditions are severe and non-crosslinked foams cannot serve appropriately. Biodegradable resin such as polylactic acid, however, cannot have sufficiently good properties because it tends to undergo hydrolysis and deteriorate in strength as it is used continuously at a high temperature for a long period of time. If addition of polyolefin resin into polylactic acid is attempted, furthermore, resin foam with good appearance will be difficult to obtain because biodegradable resin and polyolefin resin are essentially incompatible with each other, and the resulting resin foam will be poor in mechanical properties. In producing crosslinked foams, it will be also impossible to provide a product with good appearance because the two resins cannot be crosslinked uniformly.

[Patent Reference 1] Japanese Translation of PCT Application No. 04-504731
[Patent Reference 2] Japanese Unexamined Patent Publication (Kokai) No. 09-316310
[Patent Reference 3] Japanese Unexamined Patent Publication (Kokai) No. 2001-123055
[Patent Reference 4] Japanese Unexamined Patent Publication (Kokai) No. 2001-270924
[Patent Reference 5] Japanese Unexamined Patent Publication (Kokai) No. 2003-335881

[Disclosure of the invention]

[Problems to be resolved by the invention]

The inventors has achieved the present invention after carrying out studies earnestly to produce foams with good appearance as well as high flexibility and good mechanical characteristics by using polylactic acid and polyolefin resin while taking the above-mentioned conventional technologies into consideration.

The objective of the invention is to provide polylactic acid foam that is low in the load on the natural environment, sufficiently high in durability under severe molding conditions, and also high in heat resistance, flexibility and compression strain recovery.

The polylactic acid foam of the invention comprises resin composition that comprises polylactic acid (A), polyolefin resin (B) and a polyolefin resin copolymer (C) wherein the weight ratio of the polylactic acid (A) to the sum of the polyolefin resin (B) and polyolefin resin copolymer (C) in the resin composition, (A)/{(B)+(C)}, is in the range of 0.2 - 6. In a first aspect the invention provides a polylactic acid foam as defined in the accompanying Claim 1.

In the polylactic acid foam of the invention, the polyolefin resin copolymer (C) contains (meth) acrylate as at least one of the copolymer components, and the (meth)acrylate is glycidyl (meth)acrylate.

In the invention, (meth)acrylate refers to both acrylate and methacrylate. And in the invention, glycidyl (meth)acrylate also refers to both glycidyl acrylate and glycidyl methacrylate.

In the polylactic acid foam of the invention, the ratio, (X)/(Y), of the content of the glycidyl (meth) acrylate group, (X), and that of the carboxyl terminal group in the polylactic acid, (Y), in said resin composition is in the range of 0.5 - 20.

In a preferred embodiment of the polylactic acid foam of the invention, the weight ratio of the polylactic acid (A) to the sum of the polyolefin resin (B) and polyolefin resin copolymer (C) in said resin composition, (A)/{(B)+(C)}, is in the range of 0.25 - 4.

In a preferred embodiment of the polylactic acid foam of the invention, said polylactic acid (A) is a copolymer of D-polylactic acid and L-polylactic acid, with the weight ratio between the D-polylactic acid and the L-polylactic acid, i.e., either D/L or L/D, is in the range of 100/0 - 90/10.

In a preferred embodiment of the polylactic acid foam of the invention, said polylactic acid (A) is a copolymer of lactic acid, polyol, glycol and/or multivalent carboxylic acid.

In a preferred embodiment of the polylactic acid foam of the invention, 1 - 10 parts by weight of a polyfunctional monomer (D) is added to 100 parts by weight of said resin composition which comprises polylactic acid (A), polyolefin resin (B) and polyolefin resin copolymer (C). Preferred polyfunctional monomers (D) include 1,6-hexanediol dimethacrylate, trimethylolpropane trimethacrylate, triallyl cyanurate and triallyl isocyanurate.

In a preferred embodiment of the polylactic acid foam of the invention, said resin composition is crosslinked material wherein crosslinking has been achieved by using either organic peroxide or ionizing radiation, or by using both of them.

In a preferred embodiment of the polylactic acid foam of the invention, the polylactic acid foam of the invention has a gel fraction of 5% or more, and an apparent density of 10 - 500 kg/m$^3$. In a preferred embodiment of the polylactic acid foam of the invention, the polylactic acid foam of the invention has a dispersed phase and the average area of the portions in the dispersed phase is 5 $\mu$m$^2$ or less. In a more preferred embodiment, the average area of said dispersed phase is 3 $\mu$m$^2$ or less.

[Effect of the invention]

The invention provides polylactic acid foam that is low in the load on the natural environment, good in appearance, low in price, high in heat resistance, flexibility, moldability and compression strain recovery, and good in mechanical characteristics. The polylactic acid foam of the invention can be applied to uses where polyolefin resin foam has been used conventionally, and can have very high industrial values.

[Best mode for carrying out the invention]

The polylactic acid foam of the invention is described in more detail below.

The polylactic acid foam of the invention basically comprises resin composition that comprises polylactic acid (A), polyolefin resin (B) and polyolefin resin copolymer (C).

Said polylactic acid (A) used in the invention may be either pure D-polylactic acid or pure L-polylactic acid, or a copolymer of D-polylactic acid and L-polylactic acid. Furthermore, it may be a stereo-complex consisting of pure D-polylactic acid and pure L-polylactic acid mixed in an appropriate ratio. Copolymers of polylactic acid generally have a lower melting point, but have an improved shock resistance. An appropriate copolymerization ratio between D- and L-polylactic acid may be used to meet the purpose. Normally, the weight ratio between D- and L-polylactic acid, D/L or L/D, should preferably be in the range of 100/0 - 90/10.

In the polylactic acid used for the invention, the content of the carboxyl terminal group should preferably be in the range of 3 - 70 equivalents/ton. If the content of the carboxyl terminal group is less than 3 equivalents/ton, the polyolefin resin copolymer will deteriorate in reactivity, possibly reducing the compatibility with polyolefin resin. If the content of the carboxyl terminal group is more than 70 equivalents/ton, on the other hand, the polylactic acid will become more susceptible to hydrolysis, and the resulting foam can be lower in durability. Here, the content of the carboxyl terminal group in foam is measured with the method described in Examples given below.

Polylactic acid as used above may be synthesized with a known method. Such polylactic acid synthesis methods include, for example, direct condensation polymerization of lactic acid, and ring opening polymerization of cyclic dimers (lactide). D- and L-lactic acid may be produced by decomposing starch in corn into glucose followed by fermentation with lactic acid bacteria, or by oxidizing ethylene to produce lactonitrile, from which the racemic modifications of D- and L-lactic acid are synthesized followed by their optical resolution.

Such polylactic acid (A) may be either a single-component polymer or a copolymer with a component other than lactic acid. For example, a chemical compound such as polyol, glycol or multivalent carboxylic acid may be added during the polymerization process to provide a polylactic acid based substance that has desired physical properties including flexibility, tensile strength and tensile elongation.

For such compounds, usable polyols include, for example, ethylene glycol, 2-methylpropanediol, 1,4-butanediol, 1,5-pentanediol, 1,6-hexanediol, 1,7-heptangeorl, 1,8-octanediol, glycerin, trimethylolpropane, pentaerythritol and 1,2,6-hexanetriol. Usable glycols include, for example, ethylene glycol, propylene glycol, 1,3-propylene glycol, diethylene glycol and triethylene glycol.

Furthermore, usable multivalent carboxylic acids include, for example, multivalent carboxylic acids such as succinic acid, adipic acid, suberic acid, sebacic acid, dimer acid, malic acid, tartaric acid, and citric acid; hydroxycarboxylic acids and their esters; and acid anhydrides such as succinic anhydride, maleic anhydride, itaconic anhydride, adipic anhydride, phthalic anhydride, trimellitic anhydride, pyromellitic anhydride, maleic anhydride - ethylene copolymer, and maleic anhydride - acrylonitrile copolymer.
Of these compounds, preferred polyols include 1,4-butanediol and 1, 6-hexanediol, and preferred multivalent carboxylic acids include succinic acid and adipic acid.

Said polyolefin resin (B) to be used for the invention may be polypropylene (PP), high density polyethylene (HDPE), low density polyethylene (LDPE), linear low density polyethylene (LLDPE), poly-1-butene, 1,2-polybutadiene and its hydrogenated products, polyisobutylene, random copolymers and block copolymer of propylene and ethylene and/or 1-butene copolymerized at any ratio, polymethylpentene, cyclic polyolefins such as copolymers of cyclopentadiene and ethylene and/or propylene, and ethylene - propylene - diene terpolymers terpolymerized at any ethylene - propylene ratio with the diene component accounting for 50 wt% or less.

There are no particular limitations on the methods used for polymerization of these polyolefin resins, and the high-pressure process, slurry process, solution process and gas phase process may be used. To catalyze the polymerization, the Ziegler catalyst and metallocene catalyst may be used, and there are no particular limitations on the catalyst to be used. Two or more different type polyolefin resins may be used as required in order to provide a resin composition and foam with desired characteristics, and such polyolefin resin may be modified with carboxylic acid etc. to provide a product with adhesive properties etc.

As said polyolefin resin (B), polypropylene (PP), high density polyethylene (HDPE), low density polyethylene (LDPE), linear low density polyethylene (LLDPE), and random copolymers and block copolymers of propylene and ethylene and/or 1-butene at any appropriate copolymerization ratio are preferred as they are low in price. In particular, linear low density polyethylene polymerized with a metallocene catalyst is most preferred because resulting foam will be high in flexibility and mechanical characteristics and if crosslinked, will be high in moldablility at high temperatures.
Such polyolefin resin (B) should preferably has a melt flow rate (hereafter referred to as MFR) in the range of 0.1 - 20 g/10min, more preferably 0.1 - 15 g/10min, at 190°C. If the MFR is below 0.1 g/10min, the resin composition will become excessively high in viscosity, possibly leading to a decrease in extrudability. On the contrary, if the MFR is above 20 g/10min, resulting polylactic acid foam would have a decreased elongation percentage. For this invention, the MFR is measured according to JIS K7210 (1999) under a load of 2.16 kgf at a temperature of 190°C.

Said polyolefin resin copolymer (C) to be used for the invention may be, for example, a block copolymer, random copolymer or graft copolymer, including, for example, a copolymer of an olefin resin such as ethylene and propylene and a vinyl compound such as vinyl acetate, (meth)acrylate, aromatic alkyl ester and aromatic vinyl. Two or more of these polyolefin resin copolymers may be used in combination as required to provide a resin composition or foam with desired properties, and they may be modified with carboxylic acid etc. to provide material with adhesive properties. The copolymerization component in these copolymers normally accounts for 1 - 50 wt%, more preferably 1 - 30 wt%.

Such polyolefin resin copolymer (C) to be used for the invention is a copolymer of an olefin and a (meth)acrylate, more specifically a copolymer comprising glycidyl (meth)acrylate as a copolymerization component. Such copolymers include, for example, those of ethylene and glycidyl methacrylate, those of ethylene, glycidyl methacrylate and vinyl acetate, and those of ethylene, glycidyl methacrylate and methyl (meth)acrylate.

When a polyolefin resin copolymer comprising a glycidyl (meth)acrylate compound as a copolymerization component is used, the reactive glycidyl group will react with the terminal group in polylactic acid to form a copolymer, leading to improved compatibility among polylactic acid (A), polyolefin resin (B) and polyolefin resin copolymer (C).

A polyolefin resin copolymer (C) comprising a glycidyl (meth)acrylate compound is used, and the ratio, (X)/(Y), of the content of the glycidyl (meth) acrylate group, (X), and that of the carboxyl terminal group in the polylactic acid, (Y), in said resin composition is in the range of 0.5 - 20. If this content ratio is below 0.5, that is, if the content of the glycidyl (meth)acrylate group is small, polylactic acid will not react sufficiently with the carboxyl terminal group, leading to a decreased compatibility. On the other hand, if this content ratio is above 20, that is, if the content of the glycidyl (meth) acrylate group is large, the resin composition can be too high in viscosity, or simply become too costly.

The weight ratio of polylactic acid (A) in the resin composition that constitutes the polylactic acid foam of the invention to the sum of the polyolefin resin (B) and polyolefin resin copolymer (C), (A)/{(B)+(C)}, is in the range of 0.2 - 6, preferably 0.25 - 4. If this weight ratio is below 0.2, that is, if the content of polylactic acid is small, such a resin composition will be unpreferable because it cannot meet the objective of the use of polylactic acid, i.e. reduction in the load on global environment. If the weight ratio is above 6, that is, if the content of polylactic acid is large, the compression strain recovery of the polylactic acid foam will be too low. From these considerations, the content of the polylactic acid (A) in the resin composition should preferably be in the range of 20 - 85 wt%, more preferably 20 - 80 wt%.

The content of the polyolefin resin (B) should preferably be in the range of 5 - 75 wt%, more preferably 10 - 70 wt%. If the content of the polyolefin resin (B) is below 5 wt%, the compression strain recovery of the polylactic acid foam will decrease, while if the content is above 70 wt%, it will be difficult to meet the objective of the use of polylactic acid.

The content of the polyolefin resin copolymer (C) should preferably be in the range of 3 - 30 wt%, more preferably 3 - 20 wt%. If the content of the polyolefin resin copolymer (C) is below 3 wt%, the resin composition will not have a sufficient compatibility, and it will be difficult for the resulting foam to have good appearance, while if the content is above 30 wt%, on the contrary, it will simply lead to an increase in cost.

The polylactic acid foam of the invention may also contain a polyfunctional monomer (D) as required. Such a polyfunctional monomer (D) plays an important role in forming crosslinks in the polylactic acid foam of the invention to meet objectives such as enhancing the heat resistance. Said polyfunctional monomer (D) as used for the invention is a compound comprising two or more unsaturated bonds in a molecule.

The content of such a polyfunctional monomer (D) should preferably be in the range of 1 - 10 parts by weight, more preferably 2 - 7 parts by weight, relative to 100 parts by weight of the resin composition that comprises polylactic acid (A), polyolefin resin (B) and polyolefin resin copolymer (C). If the content of the polyfunctional monomer (D) is below 1 part by weight, sufficient effect will not be achieved while if the content is above 10 parts by weight, it will lead to serious bleed-out or increased cost.

Conventionally known compounds can be used as said polyfunctional monomer (D). Such compounds to be used as polyfunctional monomer (D) may be, for example, acrylate or methacrylate compounds including 1,6-hexanediol dimethacrylate, ethylene glycol diacrylate, ethylene glycol dimethacrylate, trimethylolpropane trimethacrylate, tetramethylolmethane triacrylate, and 1,9-nonanediol dimethacrylate, 1,10-decanediol dimethacrylate; allylic esters of carboxylic acid including triallyl trimellitate, triallyl pyromellitate, and diallyl oxalate; allylic esters of cyanuric acid or isocyanuric acid including triallyl cyanurate, and triallyl isocyanurate; maleimide compounds N-phenylmaleimide, and N,N'-m-phenylene bismaleimide; compounds with two or more triple bonds including dipropargyl phthalate, and dipropargyl maleate; and divinyl benzene.

Of these, 1,6-hexanediol dimethacrylate, trimethylolpropane trimethacrylate, triallyl cyanurate, and triallyl isocyanurate are preferred, and triallyl cyanurate and triallyl isocyanurate are the most preferred. As a resin, polylactic acid is degraded very easily when exposed to ionizing radiation, and therefore, it should preferably be crosslinked with a small exposure dose of such radiation. As an embodiment, the use of a compound with a high reactivity allyl group is preferred.

When the polylactic acid foam of the invention is crosslinked by using said polyfunctional monomer (D), said crosslinking should preferably be achieved by using an organic peroxide and/or by exposure to ionizing radiation.

Such crosslinking of polylactic acid foam may be carried out before, during, or after the foaming process. If it is crosslinked before or during the foaming process, adequate care should be taken particularly about the crosslinkability of polylactic acid (A), polyolefin resin (B) and polyolefin resin copolymer (C). Thus, if there is an excessively large different in crosslinkability among them, it will be difficult to produce form with uniform properties. So, it is preferable that the crosslinkability of each resin be examined in advance to allow foam to be produced under conditions where the difference in crosslinkability has been minimized. To achieve such conditions with a minimized crosslinkability among the resins, the absolute value of the difference in gel fraction of each resin separately crosslinked under the same conditions should preferably be in the range of 0 - 50, more preferably 0 - 35. If the absolute value of the difference in gel fraction is above, however, polylactic acid foam may be produced in some cases by using several polyfunctional monomers, performing radiation several times, or adjusting the crosslinking temperature appropriately. The gel fraction as referred to above should be as measured by the method described below.

When an organic peroxide is used to produce crosslinked foam, such an organic peroxide may be, for example, dicumyl peroxide, 2,5-dimethyl-2,5-di-(t-butylperoxy)-hexyne-3, $\alpha,\alpha$'-bis(t-butylperoxy diisopropyl)benzene, t-butylperoxy cumene, n-butyl-4,4'-di-(t-butylperoxy)varelate, 1,1-di-(t-butylperoxy)-3,3,5-trimethylcyclohexane, or 1,1-di-(t-butylperoxy)cyclohexane. Said organic peroxide is normally used in the range of 0.2 - 10 parts by weight relative to 100 parts by weight of the resin composition. If the content of said organic peroxide is less than 0.2 parts by weight, the effect of its addition will not be achieved sufficiently, while if it is more than 10 parts by weight, crosslinking will take place to an excessive degree, and in addition, the resin may suffer radical decomposition, even leading to a decrease in viscosity. In embodiment of the invention, said polylactic acid foam comprises a crosslinked resin composition. Ionizing radiation may be used to achieve such crosslinking. Such ionizing radiation may be, for example, alpha ray, beta ray, gamma ray or electron beam. The exposure dose of said ionizing radiation may vary depending on the desired degree of crosslinking, desired shape and thickness of the material under irradiation, etc., but in most cases, the required exposure dose is in the range of 1 - 200 kGy, more preferably 1 - 100 kGy. If the exposure dose is too small, crosslinking will not proceed sufficiently to achieved required effect, while if it is too large, the resin may be decomposed. Of the various types of ionizing radiation, electron beam is preferred because resin of different thicknesses can be crosslinked efficiently by changing the electron acceleration voltage appropriately. There are no limitations on the number of repetitions of the ionizing radiation process.

If the polylactic acid foam of the invention is in the form of crosslinked foam, the gel fraction should preferably be more than 5%, more preferably more than 10%. If the gel fraction is less than 5%, the crosslinked foam may fail to have a sufficient heat resistance. There are no specific upper limits to the gel fraction. The heat resistance of such foam will increase with an increasing gel fraction, but the elongation percentage at normal temperature will tends to decrease. So, the gel fraction should preferably be in the range of 5 - 80%. An appropriate degree of gel fraction may be used to meet the objective of the resulting material. The gel fraction of said polylactic acid foam should be as measured with the method described below.

Specifically, about 50 mg of polylactic acid foam is measured off accurately, immersed in 25 ml of tetralin at 130°C for 3 hours, filtered through a 200-mesh stainless steel net, washed in acetone, and vacuum-drying the insoluble material left on the net. Then, the weight of this insoluble material is measured accurately, and the percent gel fraction is calculated by the equation given below. gel fraction (%) = (weight of insoluble material (mg)/weight of weighed polylactic acid foam (mg)} $\times$ 100

Said polylactic acid (A) and said polyolefin resin (B) are not compatible with each other, and therefore, the polylactic acid foam of the invention has a sea-island structure in which either the polylactic acid (A) or the polyolefin resin (B) forms the continuous phase (sea phase) while the other forms the dispersed phase (island phase). As the dispersed phase becomes larger, rupture etc. will be more likely to occur at the interface between the continuous phase and the dispersed phase, causing deterioration in mechanical and thermal characteristics of the polylactic acid foam of the invention, indicating that the size of the dispersed phase should be minimized to achieve preferred characteristics. Thus, a dispersed phase exists in the polylactic acid foam of the invention, and the average area of the dispersed phase should preferably be 5 $\mu m^2$ or less, more preferably 3 $\mu m^2$ or less. The smaller the average area of the dispersed phase is, the better the result will be.

Furthermore, if the polylactic acid foam of the invention is crosslinked form that is produced by using an organic peroxide and/or ionizing radiation for crosslinking and using a thermally-degradable foaming agent, the size of the dispersed phase should also be as smaller as possible in order to enhance the appearance of the crosslinked foam. Differences between the polylactic acid (A) and the polyolefin resin (B) that constitute the polylactic acid foam of the invention may arise from the fact that the polylactic acid (A) and the polyolefin resin (B) differ in crosslinking properties. If the size of the dispersed phase is large, portions with a high degree of crosslinking and those with a low degree of crosslinking can be distributed unevenly during the process of crosslinking under ionizing radiation. These portions of the resin will differ in degree of elongation during the process of foaming, possibly leading to failure in producing foam with good appearance.

At the present time, it is not clear whether the dispersed phase should be formed of the polylactic acid (A) or the polyolefin resin (B) to produce better results, but if a high degree of elongation is to be achieved, the dispersed phase should be formed of the polylactic acid (A). The reason is as follows: the glass transition temperature of the polylactic acid (A) is about 60°C, that is, higher than normal temperature, and therefore, if the polylactic acid (A) constitutes the continuous phase, the rubber elasticity of the polylactic acid foam will be poor at normal temperature, leading to a smaller degree of elongation at normal temperature.

Said average area of the dispersed phase as referred to above should be as measured according to the following procedure: a thin slice with a thickness of 50 nm or less is cut out from an appropriate portion of the polylactic acid foam, and the cross section is photographed with a transmission electron microscope. It may be dyed before photographing with ruthenium tetroxide etc. as required. An image analyzer is then used to determine the grain size from the photograph, and the average area of the dispersed phase is calculated from the grain size.

Furthermore, the polylactic acid foam of the invention may contain various known additives to achieve different required characteristics as long as they do not retard the effect of the invention. Such additives include, for example, organic peroxides, antioxidants, lubricants, thermal stabilizers, pigments, flame retardants, flame retardation assistants, antistatic agents, nucleating agents, plasticizers, antibacterial agents, biodegradation accelerators, foaming agent degradation accelerators, photostabilizers, ultraviolet absorbers, antiblocking agents, fillers, deodorants, viscosity improvers, foam stabilizers, and metal degradation inhibitors, which may be used singly or in combination.

The polylactic acid foam of the invention may be in the form of sheets, blocks, grains, or other different shapes, and the foam also may be of the closed cell type or the open-cell type. Furthermore, the foam may be crosslinked or non-crosslinked.

The apparent density of the polylactic acid foam of the invention should preferably be in the range of 10 - 500 kg/m$^3$, more preferably 20 - 400 kg/m$^3$. If the apparent density is less than 10 kg/m$^3$, the foam will be light in weight but poor in mechanical strength, while if the apparent density is more than 500 kg/m$^3$, the foam will not be sufficiently light in weight though it may have a sufficient mechanical strength. The apparent density of the polylactic acid foam should be as measured according to JIS-K 6767 (1999) at a temperature of 23°C±2°C and a humidity of 50%±5%.

Known methods to produce said foam include the use of a physical foaming agent during extrusion from an extruder, foaming in a mold, and foaming with a chemical foaming agent.

Such physical foaming agents include, for example, volatile hydrocarbons such as propane, n-butane, isobutane, n-pentane and isopentane; halogen-based hydrocarbons such as dichlorodifluoromethane, 1,1,1-trifluoroethane, and methylene chloride; ethers such as diethyl ether and methylethyl ether, and other substances such as carbon dioxide and nitrogen, which may be used singly or in combination. Alcohol and water may also be used as foaming assistant. Of these, the use of carbon dioxide in a supercritical state is preferred because it is safe and low in the load on global environment.

Such chemical foaming agents include, for example, bicarbonates such as azodicarbonamide, benzenesulfonyl hydrazide, dinitrosopentamethylene tetramine, toluenesulfonyl hydrazide, azobisisobutyronitrile, barium azodicarboxylate, and sodium bicarbonate, which may be used singly or in combination. In a preferred embodiment, foaming agent degradation accelerators such as zinc oxide and zinc stearate may be used as required in order to achieve a foam with a uniform properties.

Next, methods to produce the polylactic acid foam of the invention are described below.

Production of foam with a volatile physical foaming agent may be performed by, for example, putting polylactic acid (A), polyolefin resin (B) and polyolefin resin copolymer (C) in an extruder, and injecting a foaming agent into the extruder during the extrusion process while melting and kneading the material, which is then extruded through the nozzle to provide polylactic acid foam. The resin may be impregnate with the foaming agent in advance. By using an extruder equipped with a nozzle of an appropriate type and shape, it is possible to produce polylactic acid foam of a desired form such as sheet, block or strand.

The amount of the physical foaming agent used should preferably be in the range of 1 - 100 parts by weight, more preferably 1 - 20 parts by weight, and still more preferably 1 - 10 parts by weight, relative to 100 parts by weight of resin comprising polylactic acid (A), polyolefin resin (B) and polyolefin resin copolymer (C) . If the amount of the foaming agent used is less than 1 part by weight, the resulting foam will be low in foam expansion ratio, while if the amount is more than 100 parts by weight, the foam will not be able to retain gas efficiently, leading to poor surface morphology.

In another process, a volatile physical foaming agent is used to produce granular polylactic acid foam, which is then heat-sealed to provide foam of a desired shape. Processes for producing such granular polylactic acid foam include, for example, the following.

First, polylactic acid (A), polyolefin resin (B), and polyolefin resin copolymer (C) are melted and kneaded in an extruder to provide pellets with a diameter of 1.0 - 5 mm and length of 2 - 7 mm. Then, the pellets, along with a volatile foaming agent, are put in an airtight container such as autoclave, heated up to a temperature of about 150 - 250°C, and released into the atmosphere through a pipe of stainless steel etc, with an inside diameter of 0.3 - 5 mm to produce foamed particles with a diameter of 0.5 - 5 mm.

Before this process, additives such as foaming assistant and foam nucleating agent as described above may be added in advance. Such foamed particles may be used to fill a mold of a desired shape, and then heated from outside to fusion-bond these foamed particles to provide a molded article.

When a thermally degradable foaming agent is used in the foaming process, the resin should preferably be crosslinked because bubbles will be less likely to break, resulting in polylactic acid foam with better appearance. Methods for crosslinking such resin include the use of organic peroxide and exposure to ionizing radiation. Said resin composition should preferably contain a polyfunctional monomer (D) to prevent decomposition of the polylactic acid and ensure efficient crosslinking.

The amount of said thermally degradable foaming agent to be added should preferably be in the range of 1 - 30 parts by weight relative to 100 parts by weight of the resin composition that comprises polylactic acid (A), polyolefin resin (B) and polyolefin resin copolymer (C). If the amount of the thermally degradable foaming agent to be added is less than 1 part by weight, sufficient foaming will not be achieved and the resulting foam will have an undesirably high density. If the amount of the thermally degradable foaming agent is more than 30 parts by weight, it will be difficult to produce foam with uniform properties and the resulting foam is likely to be poor in mechanical strength.

When an organic peroxide is used to carry out crosslinking, polylactic acid foam can be produced by, for example, supplying polylactic acid (A), polyolefin resin (B), polyolefin resin copolymer (C), polyfunctional monomer (D), organic peroxide, and a thermally degradable foaming agent to an extruder to mold them into an expandable resin composition in the form of a sheet. It is then heated above the decomposition temperature of the thermally degradable foaming agent to decompose the organic peroxide. Thus, the foaming agent is thermally decomposed while the resin is crosslinked, allowing polylactic acid foam to be produced. To make this possible, the decomposition temperature of the organic peroxide used should preferably be higher than the kneading temperature of the resin composition, and lower than the decomposition temperature of the thermally degradable foaming agent.

When ionizing radiation is used to carry out crosslinking, polylactic acid foam may be produced by, for example, supplying polylactic acid (A), polyolefin resin (B), polyolefin resin copolymer (C), polyfunctional monomer (D), and a thermally degradable foaming agent to an extruder to mold them into an expandable resin composition in the form of a sheet. The sheet is then exposed to ionizing radiation to crosslink the resin. The crosslinked resin sheet is then heated above the decomposition temperature of the thermally degradable foaming agent to decompose the foaming agent to provide polylactic acid foam. For the heating process, known methods may be used such as, for example, the use of a vertical or horizontal type hot-air foam oven and heating on a chemical liquid bath containing a molten salt etc.

In any of the above-mentioned production processes, kneading of the molten resin composition can be carried out by using a kneading apparatus such as a uniaxial, biaxial, or tandem type extruder, mixing roll, Banbury mixer, or kneader-mixer. When an extruder is used, said extruder should preferably be equipped with a vacuum vent. Said resin and additives may be blended as required in, for example, a V-blender or Henschel mixer before supplying them to the extruder. To ensure stable quality, the resin should preferably be dried with a hopper dryer or vacuum dryer before the melting and kneading process.

The melting and kneading temperature for said resin should preferably be in the range of 150°C - 250°C, more preferably 150°C - 230°C. If the temperature is lower than 150°C, heating will not be enough to achieve sufficient kneading, possibly leading to a poor compatibility, while if the temperature is higher than 250°C, the polylactic acid will be degraded, possibly leading to a poor elongation degree.

For vehicles, uses of the polylactic acid foam of the invention include, for example, interior material such as for door, instrument panel, sheet backing garnish, console box, ceiling, and floor mat; various insulators such as for dashboard panel and rear-side trim; trunk side and wheel house cover. The polylactic acid foam of the invention can also be used as, for example, heat insulating material for pipe cover, spiral hose and long-type roof. The polylactic acid foam of the invention can also be used as, for example, cushioning material for mat such as desk mat and floor mat, and buffer material for paper core tube. Further more, there are many other uses of the polylactic acid foam of the invention including, for example, base of packing material and adhesive tape, and joint filling material for tile.

[Examples]

The polylactic acid foam of the invention is described more in detail hereinafter with reference to the following examples. The substances used as polylactic acid (A), polyolefin resin (B), polyolefin resin copolymer (C) and polyfunctional monomer (D) in the following Examples 1 - 9 and Comparative examples 1 - 7 are as follows.

<polylactic acid (A)>

[a1] - - - Copolymer of D-polylactic acid and L-polylactic acid with a content of D-form of 3.9%, weight average molecular weight of about 180,000, and content of carboxyl terminal group of 25 equivalents/ton

[a2] - - - Copolymer of D-polylactic acid and L-polylactic acid with a content of D-form of 12.5%, weight average molecular weight of about 160,000, and content of carboxyl terminal group of 31 equivalents/ton

[a3] - - - Copolymer of D-polylactic acid and L-polylactic acid with a content of D-form of 1.2%, weight average molecular weight of about 180,000, and carboxyl terminal group of 22 equivalents/ton The content of the carboxyl terminal group (equivalents/ton) of said polylactic acid is measured as described below.

A 0.8 g portion of polylactic acid is dissolved in 20 ml of a 1:1 chloroform - methanol mixture solvent and, using a phenolphthalein solution as indicator, titrated with a 0.02 N KOH methanol solution. The weight average molecular weight of said polylactic acid is determined by comparison with the molecular weight of a standard polystyrene in performing gel permeation chromatography (HLC-8120GPC manufactured by Tosoh Corporation) under the following conditions.

- solvent: chloroform
- sample solution concentration: 0.2 wt/vol%
- sample solution injection: 200 $\mu$l
- solvent flow rate: 1.0 ml/min
- pump, column, detector temperature: 40°C

<polyolefin resin (B)>

[b1] - - - Low density polyethylene (LDPE) with a density of 923 kg/m$^3$, and melt mass-flow rate at 190°C of 3.7 g/10min

[b2] - - - Linear low density polyethylene (LLDPE), which is polymerized with a metallocene catalyst, with a density of 923 kg/m$^3$, and melt mass-flow rate at 190°C of 1.5 g/10min

[b3] - - - Ethylene - propylene random copolymer (r-EPC) with an ethylene content of 4.5%, and melt mass-flow rate at 230°C of 1.8 g/10min

[b4] - - - Syndiotacticl,2-polybutadiene (trade name RB830 manufactured by JSR Corporation) with 1,2 bond percentage of 93%, and melt mass-flow rate at 150°C of 3.0 g/10min

The density of polyolefin resin (B) is measured according to JIS K 7112 (1999).

<polyolefin resin copolymer (C)>

[c1] - - - Bondfast (registered trademark) E copolymer, manufactured by Sumitomo Chemical Co., Ltd., with an ethylene content of 88 wt%, and glycidyl methacrylate content of 12 wt%

[c2] - - - Bondfast (registered trademark) 2B copolymer, manufactured by Sumitomo Chemical Co., Ltd., with an ethylene content of 83 wt%, glycidyl methacrylate content of 12 wt%, and vinyl acetate content of 5 wt%

[c3] - - - Bondfast (registered trademark) 7M copolymer, manufactured by Sumitomo Chemical Co., Ltd., with an ethylene content of 67 wt%, glycidyl methacrylate content of 6 wt%, and methyl acrylate content of 27 wt%

[c4] - - - Modiper (registered trademark) A4200 copolymer, manufactured by NOF Corporation, with an ethylene content of 59.5 wt%, glycidyl methacrylate content of 10.5 wt%, and methyl methacrylate content of 30 wt%

<polyfunctional monomer (D)>

[d1] - - - Triallyl isocyanurate

[d2] - - - Triallyl cyanurate

The appearance and compression strain recovery of polylactic acid foam are evaluated as described below.

[Appearance]

For evaluation of appearance, five A4-size sheets of polylactic acid foam are cut off, and both sides of them are observed visually. If one or more broken or coarse cell is found in a sheet, it is evaluated as "×" while a sheet without such cells is evaluated as "O". A "broken cell" is a defect in which the skin of a cell on the surface of polylactic acid foam is torn to form a small hollow, and a "coarse cell" is a defect in which a cell is enlarged locally because the viscosity is not uniform as a result of crosslinking spots and uneven dispersion in the resin composition.

[Compression strain recovery]

For evaluation of compression strain recovery, 5 cm × 5 cm square pieces of polylactic acid foam are piled up to a thickness of about 25 mm, and the thickness of the pile is measured accurately. The pile is pressed in the thickness direction at a speed of 10 mm/min until the thickness decreases by 25%. When the decrease in thickness has reached 25%, the compression is released at a speed of 10 mm/min. Here, the hysteresis loss rate can be calculated by the following equation where the compression energy is the energy required for pressing the pile, while the decompression energy is the energy required for releasing the force.

```
hysteresis loss rate = 100 × (compression energy - decompression
energy)/ compression energy
```

A larger value of the hysteresis loss rate as calculated as describe above indicates that the compression strain recovery is small. For compression strain recovery, a pile is evaluated as "× (rejection)" if the hysteresis loss rate is larger than 90% while a pile is evaluated as "o (acceptance)" if the rate is 90% or smaller.

[Tensile elongation]

The tensile elongation is measured according to JIS K 6767 (1999). A test piece of polylactic acid foam is heated for 5 min in a hot-air oven adjusted to 100°C, and then pulled at a speed of 500 mm/min to determine the degree of elongation at the point of tensile rupture. A test piece is evaluated as "O (acceptance)" or "× (rejection)" if the degree of elongation is 100% or more or less than 100%, respectively.

[Area of dispersed phase]

To measure the area of the dispersed phase, a thin slice with a thickness of 50 nm or less is cut out from an appropriate portion of polylactic acid foam, and the unstained slice is photographed under a transmission electron microscope (H7100 manufactured by Hitachi, Ltd.) at a magnification of 10000 and acceleration voltage of 100 kV. A trace image was produced from the photograph taken, and examined using an image analyzer with an image analyzing software (Image-Pro Plus Ver.4.0) to determine the average area.

(Example 1)

A uniform mixture consisting of 30 parts by weight of said [a1] as polylactic acid (A), 60 parts by weight of said [b1] as polyolefin resin (B), and 10 parts by weight of said [c1] as polyolefin resin copolymer (C) was produced by mixing them in a V-type blender. The mixture was dried for 4 hours in a vacuum dryer adjusted to 60°C, extruded from a unidirectional, biaxial extruder with a screw diameter of 40 mm under the conditions of a screw rotation speed of 150 rpm, temperature of cylinder's front portion of 180 - 200°C and temperature of cylinder' s rear portion of 160 - 180°C, to produce a strand which was then processed into a resin composition in the form of pellets. Using a uniaxial extruder with a screw diameter of 70 mm adjusted to a cylinder temperature of 165°C, the resin composition obtained was extruded through its circular die with a gap of 0.4 mm along with 6.5 wt% of isobutane as foaming agent to produce tubular foam, which was then cut open to provide a sheet of polylactic acid foam. The polylactic acid foam sheet had good quality with smooth surfaces and uniform bubbles. The composition of the resin and results of its evaluation are shown in Tables 1 and 2, respectively. The polylactic acid foam obtained had dispersed phase portions formed of polylactic acid, and their average area was 2.1 $\mu m^2$.

(Examples 2 - 4, Comparative examples 1 - 4)

In Examples 2 - 4 and Comparative examples 1 - 4, polylactic acid foam was produced by carrying out the same procedure as in Example 1 excepting that the compositions shown in Table 1 were used. Table 2 show evaluations of physical properties of the polylactic acid foam sheets obtained.

[Table 1]

| | polylactic acid (A) | | polyolefin resin (B) | | polyolefin resin copolymer (C) | | (A)/ {(B)+(C)} | foaming agent added |
|---|---|---|---|---|---|---|---|---|
| | type | weight (%) | type | weight (%) | type | weight (%) | | weight (%) |
| Example1 | a1 | 30 | b1 | 60 | c1 | 10 | 0.4 | 6.5 |
| Example2 | a2 | 40 | b1 | 30 | c2 | 10 | 0.7 | 6.5 |
| | | | b3 | 20 | | | | |
| Example3 | a3 | 60 | b2 | 30 | c4 | 10 | 1.5 | 6.8 |
| Example4 | a1 | 70 | b2 | 20 | c1 | 10 | 2.3 | 5.8 |
| Comparative example 1 | a1 | 30 | b1 | 70 | | | 0.4 | 6.5 |
| Comparative example 2 | a2 | 60 | b2 | 40 | | | 1.5 | 6.5 |
| Comparative example 3 | a3 | 90 | b1 | 5 | c1 | 5 | 9.0 | 6.5 |
| Comparative example 4 | a3 | 50 | | | c1 | 50 | 1.0 | 6.5 |

[Table 2]

| | thickness (mm) | apparent density (kg/m$^3$) | appearance | compression strain recovery | dispersed phase | average area of dispersed phase portions ($\mu m^2$) |
|---|---|---|---|---|---|---|
| Example 1 | 2.8 | 70 | ○ | ○ | polylactic acid | 2.1 |
| Example 2 | 2.9 | 75 | ○ | ○ | polylactic acid | 1.9 |
| Example 3 | 2.5 | 68 | ○ | ○ | polyolefin resin | 3.2 |
| Example 4 | 1.9 | 87 | ○ | ○ | polyolefin resin | 2.9 |
| Comparative example 1 | 1.9 | - | × | - | | |
| Comparative example 2 | 1.7 | - | × | - | | |
| Comparative example 3 | 2.7 | 78 | ○ | × | | |
| Comparative example 4 | - | - | - | - | | |

The polylactic acid foam sheets produced in Examples 1 - 4 had good appearance and high compression strain recovery performance. In Comparative examples 1 and 2 where polyolefin resin copolymer (C) was not used, however, the compatibility between the polylactic acid and the polyolefin resin was poor, leading to inferior foam surface morphology, and it was impossible to measure the density or the compression strain recovery. In Comparative example 3 where the resin's weight ratio was large, the foam obtained showed insufficient compression strain recovery though it had good appearance. In Comparative example 4 where polyolefin resin (B) was not used, the amount of polyolefin resin copolymer was large, and the resin pressure fluctuated largely at the end of the extruder, making it impossible to produce foam continuously.

(Example 5)

To 100 parts by weight of pellets of the resin composition produced in Example 1, 5 parts by weight of triallyl cyanurate was added as polyfunctional monomer, along with 9 parts by weight of azodicarbonamide as foaming agent, 0.3 parts by weight of Irganox (registered trademark) 1010 (manufactured by Ciba Specialty Chemicals K.K.) as thermal stabilizer, and 0.2 parts by weight of Adekastab (registered trademark) AO-30 (manufactured by Asahi Denka Kogyo K.K.) as thermal stabilizer, and a biaxial extruder with a screw diameter of 60 mm was used with the front portion of its cylinder adjusted to 170 - 180°C and the rear portion adjusted to 150 - 160°C to extrude the mixture through a T die at a screw rotation speed of 15 rpm, providing a long foam sheet with a thickness of 1.2 mm. Then the foam sheet was exposed to 8kGy of ionizing radiation at an acceleration voltage of 800kV to crosslink the resin. The crosslinked sheet obtained was fed continuously into a vertical type hot-air foam oven adjusted to 240°C and subjected to a foaming process for about 3-5 min, followed by winding up to form a sheet of crosslinked polylactic acid foam. The crosslinked polylactic acid foam obtained had good quality with smooth surfaces and uniform bubbles. The resin composition, production conditions and evaluations of physical properties are shown in Tables 3, 4 and 5, respectively. The dispersed phase portions of the polylactic acid foam were formed polylactic acid and had an average area of 1.2 $\mu m^2$.

(Examples 6 - 9, Comparative examples 5 - 7)

In Examples 6 - 9 and Comparative examples 5- 7, crosslinked polylactic acid foam was produced by carrying out the same procedures as in Example 5 except that the resin composition and production conditions were as in Tables 3 and 4, respectively. Evaluations of the physical properties of the crosslinked polylactic acid foam obtained are shown in Table 5. The dispersed phase portions of the form produced in Comparative example 5 were formed of polylactic acid and had an average area of 22 $\mu m^2$.

[Table 3]

| | polylactic acid(A) | | polyolefin resin(B) | | polyolefin resin copolymer (C) | | (A)/ {(B)+(C)} |
|---|---|---|---|---|---|---|---|
| | type | weight (%) | type | weight (%) | type | weight (%) | |
| Example 5 | a1 | 30 | b1 | 60 | c1 | 10 | 0.4 |
| Example 6 | a1 | 40 | b2 | 30 | c2 | 10 | 0.7 |
| | | | b3 | 20 | | | |
| Example 7 | a2 | 50 | b2 | 40 | c3 | 10 | 1.0 |
| Example 8 | a3 | 70 | b2 | 20 | c4 | 10 | 2.3 |
| Example 9 | a1 | 90 | b1 | 30 | c4 | 10 | 0.7 |
| | | | b4 | 20 | | | |
| Comparative example 5 | a1 | 30 | b1 | 70 | | | 0.4 |
| Comparative example 6 | a2 | 60 | b2 | 40 | | | 1.5 |
| Comparative example 7 | a3 | 90 | b1 | 5 | c1 | 5 | 9.0 |

[Table 4]

| | polyfunctional monomer (D) | | thermally degradable foaming agent | ionizing radiation |
|---|---|---|---|---|
| | type | amount added (parts by weight) | amount added (parts by weight) | exposure dose (kGy) |
| Example 5 | d1 | 5 | 9 | 8 |
| Example 6 | d1 | 5 | 9 | 13 |

(continued)

| | polyfunctional monomer (D) | | thermally degradable foaming agent | ionizing radiation |
|---|---|---|---|---|
| | type | amount added (parts by weight) | amount added (parts by weight) | exposure dose (kGy) |
| Example 7 | d2 | 3 | 11 | 13 |
| Example 8 | d2 | 5 | 7 | 5 |
| Example 9 | d1 | 4 | 7 | 13 |
| Comparative example 4 | d1 | 3 | 9 | 13 |
| Comparative example 5 | d2 | 5 | 9 | 8 |
| Comparative example 6 | d1 | 5 | 7 | 8 |

[Table 5]

| | thickness (mm) | apparent density (kg/m³) | Gel fraction (%) | appearance | compression strain recovery | degree of elongation at 100°C | dispersed phase | average area of dispersed phase portions ($\mu m^2$) |
|---|---|---|---|---|---|---|---|---|
| Example 5 | 3.2 | 62 | 28 | ○ | ○ | ○ | polylactic acid | 1.2 |
| Example 6 | 2.9 | 72 | 30 | ○ | ○ | ○ | polylactic acid | 1.3 |
| Example 7 | 3.4 | 55 | 35 | ○ | ○ | ○ | polylactic acid | 1.2 |
| Example 8 | 2.3 | 80 | 35 | ○ | ○ | ○ | polyolefin resin | 2.4 |
| Example 9 | 2.4 | 82 | 43 | ○ | ○ | ○ | polylactic acid | 1.6 |
| Comparative example 5 | - | - | - | × | - | - | polylactic acid | 22 |
| Comparative example 6 | - | - | - | × | - | - | | |
| Comparative example 7 | 2.3 | 77 | 27 | ○ | × | × | | |

EP 1 865 021 B1

**EP 1 865 021 B1**

The crosslinked polylactic acid foam sheets produced in Examples 5-9 had good appearance and showed high compression strain recovery, and since they were crosslinked, they had a high degree of elongation at 100°C. Thus crosslinked polylactic acid foam sheets with excellent fabricability and good mechanical characteristics were obtained. In particular, the crosslinked polylactic acid foam produced in Example 7 had a degree of elongation of more than 600% at 100°C, and had a very high moldability.

In Comparative examples 5 and 6 where polyolefin resin copolymer (C) was not used, on the other hand, the compatibility between polylactic acid and polyolefin resin was very low, and these resins cannot be crosslinked uniformly, resulting in foam with poor appearance. It was impossible to determine its physical properties accurately. The crosslinked polylactic acid foam produced in Comparative example 7, furthermore, was poor in compression strain recovery and low in the degree of elongation at 100°C, though high in rigidity, and would be able to be used only under limited conditions.

[Industrial applicability]

The polylactic acid foam of the invention is low in the load on natural environment, had good appearance, and required little cost. The foam also has good mechanical characteristics, and is high in heat resistance, flexibility, moldability and compression strain recovery rate.

The polylactic acid foam of the invention can be applied to a wide variety of uses where polyolefin resin foam has been used conventionally, including interior members of vehicles, heat insulator, cushioning medium, packing material, base of pressure sensitive adhesive tapes, joint filler for tiles, etc., indicating that the foam has a very high industrial applicability.

**Claims**

1. Polylactic acid foam comprising a resin composition that comprises polylactic acid (A), polyolefin resin (B) and a polyolefin resin copolymer (C) which contains glycidyl (meth)acrylate as at least one of the copolymer components wherein the weight ratio of the polylactic acid to the sum of the polyolefin resin and polyolefin resin copolymer in the resin composition, (A)/{(B)+(C)}, is in the range of 0.2 - 6, and wherein the ratio, (X)/(Y), of the content of the glycidyl (meth) acrylate group, (X), and that of the carboxyl terminal group in the polylactic acid, (Y), in the resin composition is in the range of 0.5 - 20.

2. Polylactic acid foam as claimed in Claim 1 wherein the weight ratio of the polylactic acid to the sum of the polyolefin resin and polyolefin resin copolymer in the resin composition, (A) /{(B) + (C) }, is in the range of 0.25 - 4.

3. Polylactic acid foam as claimed in Claim 1 or 2 wherein the polylactic acid (A) is a copolymer of D-polylactic acid and L-polylactic acid, with the weight ratio between the D-polylactic acid and the L-polylactic acid, i.e., either D/L or L/D, is in the range of 100/0 - 90/10.

4. Polylactic acid foam as claimed in any of Claims 1 - 3 wherein the polylactic acid (A) is a copolymer of lactic acid, polyol, glycol and/or multivalent carboxylic acid.

5. Polylactic acid foam as claimed in any of Claims 1 - 4 wherein 1 - 10 parts by weight of a polyfunctional monomer (D) is added to 100 parts by weight of the resin composition which comprises polylactic acid (A), polyolefin resin (B) and polyolefin resin copolymer (C)

6. Polylactic acid foam as claimed in Claim 5 wherein the polyfunctional monomer (D) is 1,6-hexanediol dimethacrylate, trimethylolpropane trimethacrylate, triallyl cyanurate and/or triallyl isocyanurate.

7. Polylactic acid foam as claimed in any of Claims 1 - 6 wherein the resin composition is crosslinked material.

8. Polylactic acid foam as claimed in any of Claim 7 wherein crosslinking has been achieved by using either organic peroxide or ionizing radiation, or by using both of them.

9. Polylactic acid foam as claimed in any of Claims 1 - 8 wherein the polylactic acid foam has a gel fraction of 5% or more.

10. Polylactic acid foam as claimed in any of Claims 1 - 8 wherein the polylactic acid foam has an apparent density in the range of 10 - 500 kg/m$^3$.

**11.** Polylactic acid foam as claimed in any of Claims 1 - 10 wherein the polylactic acid foam contains a dispersed phase.

**12.** Polylactic acid foam as claimed in Claim 11 wherein the average area of the portions in the dispersed phase is 5 $\mu m^2$ or less.

**13.** Polylactic acid foam as claimed in Claim 12 wherein the average area of the portions in the dispersed phase is 3 $\mu m^2$ or less.


**Patentansprüche**

**1.** Polymilchsäureschaum, der eine Harzzusammensetzung umfasst, die Polymilchsäure (A), Polyolefinharz (B) und ein Polyolefinharz-Copolymer (C) umfasst, das Glycidyl-(Meth)acrylat als zumindest eine der Copolymer-Komponenten enthält, worin das Gewichtsverhältnis zwischen der Polymilchsäure und der Summe aus Polyolefinharz und Polyolefinharz-Copolymer in der Harzzusammensetzung (A) / {(B) + (C)} im Bereich von 0,2 bis 6 liegt und worin das Verhältnis (X) / (Y) zwischen dem Gehalt an Glycidyl-(Meth)acrylatgruppen (X) und jenem an Carboxyl-Endgruppen in der Polymilchsäure (Y) in der Harzzusammensetzung im Bereich von 0,5 bis 20 liegt.

**2.** Polymilchsäureschaum nach Anspruch 1, worin das Gewichtsverhältnis zwischen der Polymilchsäure und der Summe aus Polyolefinharz und Polyolefinharz-Copolymer in der Harzzusammensetzung (A) / {(B) + (C)} im Bereich von 0,25 bis 4 liegt.

**3.** Polymilchsäureschaum nach Anspruch 1 oder 2, worin die Polymilchsäure (A) ein Copolymer von D-Polymilchsäure und L-Polymilchsäure ist, wobei das Gewichtsverhältnis zwischen der D-Polymilchsäure und der L-Polymilchsäure, d.h. entweder D/L oder L/D, im Bereich von 100/0 bis 90/10 liegt.

**4.** Polymilchsäureschaum nach einem der Ansprüche 1 bis 3, worin die Polymilchsäure (A) ein Copolymer von Milchsäure, Polyol, Glykol und/oder mehrwertiger Carbonsäure ist.

**5.** Polymilchsäureschaum nach einem der Ansprüche 1 bis 4, worin 1 bis 10 Gewichtsteile eines polyfunktionellen Monomers (D) zu 100 Gewichtsteilen der Harzzusammensetzung, die Polymilchsäure (A), Polyolefinharz (B) und Polyolefinharz-Copolymer (C) umfasst, zugesetzt sind.

**6.** Polymilchsäureschaum nach Anspruch 5, worin das polyfunktionelle Monomer (D) 1,6-Hexandioldimethacrylat, Trimethylolpropantrimethacrylat, Triallylcyanurat und/oder Triallylisocyanurat ist.

**7.** Polymilchsäureschaum nach einem der Ansprüche 1 bis 6, worin die Harzzusammensetzung ein vernetztes Material ist.

**8.** Polymilchsäureschaum nach Anspruch 7, worin die Vernetzung entweder durch die Verwendung von organischem Peroxid oder durch Ionenstrahlung oder durch die Verwendung von beiden erreicht wurde.

**9.** Polymilchsäureschaum nach einem der Ansprüche 1 bis 8, worin der Polymilchsäureschaum einen Gelanteil von 5 % oder mehr aufweist.

**10.** Polymilchsäureschaum nach einem der Ansprüche 1 bis 8, worin der Polymilchsäureschaum eine scheinbare Dichte im Bereich von 10 bis 500 kg/m³ aufweist.

**11.** Polymilchsäureschaum nach einem der Ansprüche 1 bis 10, worin der Polymilchsäureschaum eine dispergierte Phase enthält.

**12.** Polymilchsäureschaum nach Anspruch 11, worin die durchschnittliche Fläche der Abschnitte in der dispergierten Phase 5 $\mu m^2$ oder weniger beträgt.

**13.** Polymilchsäureschaum nach Anspruch 12, worin die durchschnittliche Fläche der Abschnitte der dispergierten Phase 3 $\mu m^2$ oder weniger beträgt.

**Revendications**

1. Mousse en acide polylactique comprenant une composition de résine qui comprend de l'acide polylactique (A), une résine de polyoléfine (B) et un copolymère à base de résine de polyoléfine (C) qui contient du (méth)acrylate de glycidyle en tant qu'au moins l'un des composants du copolymère dans laquelle le rapport pondéral de l'acide polylactique à la somme de la résine de polyoléfine et du copolymère à base de résine de polyoléfine de la composition de résine, (A)/{(B)+(C)}, se situe dans la plage de 0,2 à 6, et dans laquelle le rapport, (X)/(Y), entre la teneur du groupe (méth)acrylate de glycidyle, (X), et celle du groupe terminal carboxyle de l'acide polylactique, (Y), de la composition de résine se situe dans la plage de 0,5 à 20.

2. Mousse en acide polylactique selon la Revendication 1 dans laquelle le rapport pondéral de l'acide polylactique à la somme de la résine de polyoléfine et du copolymère à base de résine de polyoléfine de la composition de résine, (A)/{(B)+(C)}, se situe dans la plage de 0,25 à 4.

3. Mousse en acide polylactique selon la Revendication 1 ou 2 dans laquelle l'acide polylactique (A) est un copolymère d'acide D-polylactique et d'acide L-polylactique, le rapport pondéral entre l'acide D-polylactique et l'acide L-polylactique, à savoir, soit D/L soit L/D, se situant dans la plage de 100/0 à 90/10.

4. Mousse en acide polylactique selon l'une quelconque des Revendications 1 à 3 dans laquelle l'acide polylactique (A) est un copolymère d'acide lactique, de polyol, de glycol et/ou d'acide carboxylique multivalent.

5. Mousse en acide polylactique selon l'une quelconque des Revendications 1 à 4 dans laquelle 1 à 10 parties en poids d'un monomère polyfonctionnel (D) sont ajoutées à 100 parties en poids de la composition de résine qui comprend de l'acide polylactique (A), une résine de polyoléfine (B) et un copolymère à base de résine de polyoléfine (C).

6. Mousse en acide polylactique selon la Revendication 5 dans laquelle le monomère polyfonctionnel (D) est du diméthacrylate de 1,6-hexanediol, du triméthacrylate de triméthylolpropane, du cyanurate de triallyle et/ou de l'isocyanurate de triallyle.

7. Mousse en acide polylactique selon l'une quelconque des Revendications 1 à 6 dans laquelle la composition de résine est un matériau réticulé.

8. Mousse en acide polylactique selon l'une quelconque de la Revendication 7 dans laquelle la réticulation a été réalisée en utilisant soit du peroxyde organique soit des rayonnements ionisants, ou en utilisant les deux.

9. Mousse en acide polylactique selon l'une quelconque des Revendications 1 à 8 dans laquelle la mousse en acide polylactique présente une fraction gel de 5 % ou plus.

10. Mousse en acide polylactique selon l'une quelconque des Revendications 1 à 8 dans laquelle la mousse en acide polylactique présente une densité apparente dans la plage de 10 à 500 kg/m$^3$.

11. Mousse en acide polylactique selon l'une quelconque des Revendications 1 à 10 dans laquelle la mousse en acide polylactique contient une phase dispersée.

12. Mousse en acide polylactique selon la Revendication 11 dans laquelle la surface moyenne des parties de la phase dispersée est de 5 $\mu$m$^2$ ou moins.

13. Mousse en acide polylactique selon la Revendication 12 dans laquelle la surface moyenne des parties de la phase dispersée est de 3 $\mu$m$^2$ ou moins.

**EP 1 865 021 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4504731 W
- JP 9316310 A
- JP 2001123055 A
- JP 2001270924 A
- JP 2003335881 A